# EUROPÄISCHE PATENTANMELDUNG

(11) **EP 2 636 714 A1**
(43) Veröffentlichungstag der Anmeldung: **11.09.2013**
(21) Anmeldenummer: 13157925.2
(22) Anmeldetag: 06.03.2013
(51) Int. Cl.: C09J 133/08, C08J 3/07

(54) **MEHRSTUFIGE HERSTELLUNG WÄSSRIGER HAFTKLEBSTOFFDISPERSIONEN FÜR DIE HERSTELLUNG VON SELBSTKLE-BENDEN ARTIKELN**

(30) Priorität: 09.03.2012 US 201261608649 P; 09.03.2012 EP 12158704
(71) Anmelder: BASF SE, 67056 Ludwigshafen (DE)
(72) Erfinder: Wilms, Daniel, 68165 Mannheim (DE); Licht, Ulrike, 68309 Mannheim (DE); Wulff, Dirk, 67105 Schifferstadt (DE); Langhauser, Georg, 67152 Ruppertsberg (DE)

(57) **Zusammenfassung**

Beschrieben wird ein Verfahren zur Herstellung einer wässrigen Haftklebstoffdispersion, wobei ein Polymerisat in zweistufiger Polymerisation in einem nicht oder nur wenig kettenübertragenden organischen Lösungsmittel aus C3 bis C20 Alkyl(meth)acrylaten, vernetzenden Monomeren, Säuremonomeren und optional weiteren Monomeren hergestellt und anschließend in Wasser dispergiert wird. Die wässrigen Haftklebstoffdispersionen können zur Herstellung von selbstklebenden Artikeln, insbesondere von Klebebändern verwendet werden.

## Beschreibung

Die Erfindung betrifft ein Verfahren zur Herstellung einer wässrigen Haftklebstoffdispersion aus C3 bis C20 Alkyl(meth)acrylaten, vernetzenden Monomeren, Säuremonomeren und optional weiteren Monomeren, wobei ein Polymerisat in zweistufiger Polymerisation in einem bestimmten, nicht oder nur wenig kettenübertragenden organischen Lösungsmittel hergestellt und anschließend in Wasser dispergiert wird. Die wässrigen Haftklebstoffdispersionen können zur Herstellung von selbstklebenden Artikeln, insbesondere von Klebebändern verwendet werden.

Trotz aller Fortschritte bei der Entwicklung lösemittelfreier, wässriger Haftklebstoffe sind die Eigenschaften wasserbasierter Haftklebstoffe noch nicht bei allen Anwendungsgebieten vollständig ausreichend im Vergleich zu lösungsmittelhaltigen Haftklebstoffen wobei mit Lösungsmitteln organische Lösungsmittel gemeint sind. Dies betrifft z.B. Spezialklebebänder mit hoch kohäsiven Klebstoffen zur Montage schwerer Gegenstände wie z.B. Spiegel an Wänden. Bei der Polymerisation in Wasser wie z.B. bei der Emulsionspolymerisation sind häufig die erreichbaren Molekulargewichte nicht ausreichend oder der inhärente Gehalt an Emulgatoren beeinträchtigt die Kohäsion. Prinzipiell ist denkbar, dass die erwünschten Eigenschaften lösungsmittelhaltiger Haftklebstoffe auf wässrige Systeme am ehesten dann übertragbar sein sollten, wenn die Polymerisation wie bei den lösemittelhaltigen Systemen zunächst in einem organischen Lösungsmittel durchgeführt wird und erst nach Abschluss der Polymerisation durch Hinzufügen von Wasser und Abdestillieren des Lösungsmittels eine wässrige Sekundärdispersion erzeugt wird.

Hierbei sind eine hinreichende Stabilität der Sekundärdispersion sowie insbesondere gleichzeitig hohe Scherfestigkeiten und hohe Schälfestigkeiten auf verschiedenen Substraten gewünscht. Hierfür muss der Klebstoff gut auffließen und mit dem Substrat wechselwirken, um eine hohe Adhäsion zu erzielen. Außerdem benötigt er eine hohe innere Festigkeit (Kohäsion). Beide Eigenschaften sind typischerweise gegenläufig. Die zur Stabilisierung von Dispersionen üblicherweise verwendeten Emulgatoren beeinflussen die Klebeeigenschaften und die Wasserfestigkeit in der Regel negativ. Wünschenswert wäre also ein Verfahren, das einen vollständigen oder zumindest teilweisen Verzicht auf Emulgatoren ermöglicht. Um weiterhin gutes Auffließverhalten mit hoher Kohäsion bei niedriger Glasübergangstemperatur Tg zu ermöglichen, sollten idealerweise Polymere mit hohem Molekulargewicht aber niedrigem Verzweigungs- oder Vernetzungsgrad erzeugt werden. Dies kann zwar über radikalische Lösungspolymerisation in einem nicht oder nur schwach kettenübertragenden Lösungsmittel wie Ethylacetat erreicht werden, solche Lösungsmittel sind aber üblicherweise schlecht mit Wasser mischbar, wodurch die Dispergierung erschwert wird. Eine bessere Dispergierbarkeit kann zwar prinzipiell durch eine Erhöhung der Anzahl der Säuregruppen des Klebstoffpolymers versucht werden, allerdings bewirkt eine Erhöhung der Anzahl der Säuregruppen eine unerwünschte Beeinträchtigung der Klebeeigenschaften.

Die Herstellung von Sekundärdispersionen, d.h. die Polymerisation zunächst in organischem Lösungsmittel und anschließende Dispergierung in Wasser und Entfernung des organischen Lösungsmittels ist z.B. beschrieben in DE 3536261 A1, EP 0225612 A2, WO 90/12065, DE 3720860. Es wird u.a. auch die Verwendung solcher Sekundärdispersionen für Haftklebstoffe beschrieben. Als Lösungsmittel kommen z.B. niedere sekundäre oder primäre Alkohole und Toluol zum Einsatz. Die EP 0553620 A1 beschreibt ein kontinuierliches Verfahren zur Herstellung von Polyacrylat-Sekundärdispersionen.

Die Aufgabe bestand darin, wässrige Haftklebstoffdispersionen zur Verfügung zu stellen mit möglichst geringem Emulgatorgehalt, guter Adhäsion und Kohäsion, die es u.a. ermöglichen, hochkohäsive Spezialklebebänder herzustellen.

Es wurde gefunden, dass die Aufgabe gelöst werden kann durch das nachfolgend näher erläuterte Herstellverfahren und durch die nach diesem Verfahren erhältlichen Polymerdispersionen. Gegenstand der Erfindung ist ein Verfahren zur Herstellung einer wässrigen Haftklebstoffdispersion,
- wobei zunächst in einem organischen Lösungsmittel, welches keine primären oder sekundären alkoholischen OH-Gruppen und keine allylischen oder benzylischen Wasserstoffatome aufweist, durch radikalische Polymerisation ein Polymerisat hergestellt wird,
- wobei das Polymerisat herstellbar ist aus radikalisch polymerisierbaren Monomeren, umfassend
   (a) mindestens 40 Gew.% mindestens eines C3 bis C20 Alkyl(meth)acrylats, welches, wenn es als Homopolymer polymerisiert ist, eine Glasübergangstemperatur von - 20°C oder weniger, vorzugsweise -30 °C oder weniger aufweist,
   (b) mindestens 0,05 Gew.% mindestens eines vernetzenden Monomeren,
   (c) mindestens 2 Gew,%, vorzugsweise mindestens 3 Gew.% mindestens eines Säuremonomers,
   (d) optional weiteren Monomeren,
      wobei die Angaben der Monomermengen jeweils auf die Summe aller Monomere bezogen sind,
- wobei das Polymerisat in mindestens 2 Polymerisationsstufen derart herstellbar ist, dass in einer Polymerisationsstufe eine erste Monomermischung polymerisiert wird und in einer anderen Polymerisationsstufe eine von der ersten Monomermischung verschiedene zweite Monomermischung polymerisiert wird und der Anteil an Säuremonomeren in der zweiten Monomermischung größer ist als der Anteil an Säuremonomeren in der ersten Monomermischung;
- wobei die Glasübergangstemperatur des unvernetzten Polymerisats kleiner oder gleich 20°C, vorzugsweise kleiner oder gleich -10 °C beträgt;
- und wobei das Polymerisat in Wasser dispergiert wird und das organische Lösungsmittel entfernt wird.

Dabei kann das erste Monomerengemisch in einer ersten Stufe und das zweite Monomerengemisch in einer zeitlich später erfolgenden zweiten Stufe polymerisiert werden. Die Reihenfolge der Stufen kann aber auch umgekehrt sein.

Ein Haftklebstoff ist ein viskoelastischer Klebstoff, dessen abgebundener Film bei Raumtemperatur (20°C) in trockenem Zustand permanent klebrig und klebfähig bleibt. Die Klebung auf Substraten erfolgt sofort durch leichten Anpressdruck. Eine wässrige Haftklebstoffdispersion ist eine Zusammensetzung, welche ein in Wasser oder in wässrigem Medium dispergiertes Polymer mit haftklebrigen Eigenschaften enthält.

Gegenstand der Erfindung sind auch wässrige Haftklebstoffdispersionen, hergestellt nach dem erfindungsgemäßen Verfahren, die Verwendung der erfindungsgemäßen wässrigen Haftklebstoffdispersionen zur Herstellung von selbstklebenden Artikeln, selbstklebende Artikel, welche unter Verwendung einer erfindungsgemäßen wässrigen Haftklebstoffdispersion hergestellt sind sowie ein entsprechendes Verfahren zur Herstellung von selbstklebenden Artikeln.

Im Folgenden werden gelegentlich die Bezeichnung "(Meth)acryl..." und ähnliche Bezeichnungen als abkürzende Schreibweise verwendet für "Acryl... oder Methacryl...".

Die Polymerisation wird in einem nicht oder nur besonders wenig kettenübertragenden organischen Lösungsmittel durchgeführt. Es handelt sich insbesondere um organische Lösungsmittel, welche keine unter den Polymerisationsbedingungen abstrahierbaren Wasserstoffatome, insbesondere keine primären oder sekundären alkoholischen OH-Gruppen und keine allylischen oder benzylischen Wasserstoffatome aufweisen. Das organische Lösungsmittel hat vorzugsweise einen Siedepunkt von 50 bis120 °C. Bevorzugte Lösungsmittel sind Alkansäurealkylester, z.B. C1 bis C4-Alkansäure-C1 bis C4-Alkylester, tert.-Butanol, Cyclohexan und Aceton. Besonders bevorzugt ist Ethylacetat, d.h. das Lösungsmittel besteht ganz oder im Wesentlichen (z.B. > 90 Gew.%) aus Ethylacetat. Als Lösungsmittel sind auch Gemische der genannten Lösungsmittel zu verstehen.

Das Polymerisat wird gebildet aus (a) mindestens 40 Gew.%, vorzugsweise mindestens 50 Gew.-%, besonders bevorzugt mindestens 60 Gew.-%, z.B. von 60 bis 95 Gew.%, mindestens eines C3 bis C20 Alkyl(meth)acrylats, welches, wenn es als Homopolymer polymerisiert ist, eine Glasübergangstemperatur von -20°C oder weniger, vorzugsweise -30 °C oder weniger oder -40 °C oder weniger, vorzugsweise von -45°C oder weniger aufweist. Die Glasübergangstemperatur lässt sich durch bekannte Methoden z.B. Differential Scanning Calorimetrie (s. z.B. ASTM 3418/82, sog. "midpoint temperature") bestimmen. Als Monomere (a) bevorzugt sind C₄-bis C₁₀-Alkylacrylate und C₄- bis C₁₀-Alkylmethacrylate, insbesondere C₄- bis C₈-Alkylacrylate und C₄- bis C₈-Alkylmethacrylate, z.B. n-Butylacrylat, n-Hexylacrylat, Octylacrylat und 2-Ethylhexylacrylat sowie Mischungen dieser Monomere. Ganz besonders bevorzugt sind n-Butylacrylat und 2-Ethylhexylacrylat sowie Mischungen dieser Monomere.

Das Polymerisat wird außerdem gebildet aus (b) mindestens 0,05 Gew.%, z.B. von 0,05 bis 10 Gew.% oder von 0,1 bis 5 Gew.%, insbesondere von 0,2 bis 3 Gew.%, bezogen auf die Summe aller Monomere, mindestens eines vernetzenden Monomeren. Vernetzende Monomere sind Monomere, welche bewirken, dass das Polymerisat chemisch, thermisch oder photochemisch vernetzbar ist. Vernetzende Monomere sind z.B. Monomere mit mindestens einer Epoxygruppe, Monomere mit mindestens einer Silangruppe, Monomere mit mindestens einer Fotoinitiatorgruppe oder Monomere mit mindestens einer z.B. gegenüber Hydrazinen reaktiven Keto- oder Aldehydgruppen, z.B. Acetoacetoxyethylmethacrylat (AAEMA).

Monomere mit mindestens einer Epoxygruppe sind z.B. Monomere mit mindestens einer Glycidylgruppe. Bevorzugte Monomere (b) mit Glycidylgruppe sind Glycidylmethacrylat (2,3-Epoxypropylmethacrylat) und Glycidylacrylat (2,3-Epoxypropylacrylat). Besonders bevorzugt ist Glycidylmethacrylat (GMA). Das Polymerisat enthält vorzugsweise 1 bis 400 mmol Epoxygruppen, berechnet mit einem Molekulargewicht von 42 g/Mol auf 1 kg Polymer. Vorzugsweise beträgt der Gehalt an Epoxygruppen 1 bis 150 mmol, besonders bevorzugt 5 bis 50 mmol auf 1 kg Polymer. Die Epoxygruppen können auch durch polymer-analoge Umsetzung des Polymeren mit geeigneten Verbindungen nachträglich an bereits einpolymerisierte Monomere des Polymerisats gebunden werden. Vorzugsweise werden bei der Polymerisation Epoxygruppen enthaltende Monomere mitverwendet. Die Menge dieser Monomeren wird so gewählt, dass das Polymer nach der Polymerisation vorzugsweise den obigen Gehalt an Epoxygruppen hat.

Vernetzende Monomere mit mindestens einer Silangruppe sind Monomere, welche mindestens eine Gruppe der Formel -SiR1 R2R3 aufweisen, wobei die Substituenten R1, R2 und R3 C1- bis C6-Alkylgruppen und/oder C1- bis C6-Alkoxygruppen bedeuten mit der Maßgabe, dass mindestens einer der Reste eine Alkoxygruppe ist. Bevorzugte Reste R1 bis R3 sind Methyl, Ethyl, Methoxy und Ethoxy. Bevorzugte Silangruppen sind Trimethoxysilan-, Triethoxysilan- und Methyldimethoxysilangruppen. Geeignete Monomere sind z.B. die entsprechenden Mercaptosilane, z.B. Mercapto-C1-8-alkylsilane.

Im Falle der Verwendung von Monomeren mit mindestens einer Fotoinitiatorgruppe als vernetzendes Monomer (b) enthält der Haftklebstoff vorzugsweise 0,0001 bis 0,1 mol, besonders bevorzugt 0,0002 bis 0,1, ganz besonders bevorzugt 0,0003 bis 0,01 mol des Fotoinitiators, bzw. der als Fotoinitiator wirksamen, an das Polymer gebundenen Molekülgruppe, pro 100 g Klebstoff, bezogen auf Feststoffgehalt. Monomere mit Fotoinitiatorgruppe sind strahlungsempfindliche, radikalisch polymerisierbare organische Verbindungen. Strahlungsempfindliche, radikalisch polymerisierbare organische Verbindungen werden im Folgenden kurz als polymerisierbarer Fotoinitiator bezeichnet. Der polymerisierbare Fotoinitiator kann durch radikalische Copolymerisation in die Polymerkette von Copolymeren eingebaut werden. Polymerisierbare Fotoinitiatoren haben vorzugsweise folgenden prinzipiellen Aufbau:
A-X-B
wobei A ein einwertiger organischer Rest ist, welcher als strahlungsempfindliche Gruppe vorzugsweise eine Phenongruppe aufweist,

X eine Estergruppe ist, ausgewählt aus -O-C(=O)-, -(C=O)-O und -O-(C=O)-O-, und

B ein einwertiger organischer Rest ist, welcher eine ethylenisch ungesättigte, radikalisch polymerisierbare Gruppe enthält. Bevorzugte Reste A sind Reste, welche mindestens ein Strukturelement enthalten, welches abgeleitet ist von Phenonen, insbesondere von Acetophenonen oder Benzophenonen. Bevorzugte Reste B enthalten mindestens eine, vorzugsweise genau eine Acryl- oder Methacrylgruppe.

Die ethylenisch ungesättigte Gruppe kann direkt an die Gruppe X gebunden sein. Ebenso kann die strahlungsempfindliche Gruppe direkt an die Gruppe X gebunden sein. Es können sich aber auch zwischen ethylenisch ungesättigter Gruppe und der Gruppe X bzw. zwischen strahlungsempfindlicher Gruppe und Gruppe X jeweils eine Spacergruppe (Abstandshalter) befinden. Die Spacergruppe kann z.B. ein Molekulargewicht von bis zu 500, insbesondere bis zu 300 oder 200 g/Mol aufweisen.

Geeignete Fotoinitiatoren sind z.B. Verbindungen mit Acetophenon- oder Benzophenonstruktureinheiten, beispielsweise beschrieben in EP 377191 A oder EP 1213306 A. Eine bevorzugte Gruppe X ist die Carbonatgruppe -O-(C=O)-O-. Bevorzugte polymerisierbare Fotoinitiatoren sind Verbindungen der Formel F-1: 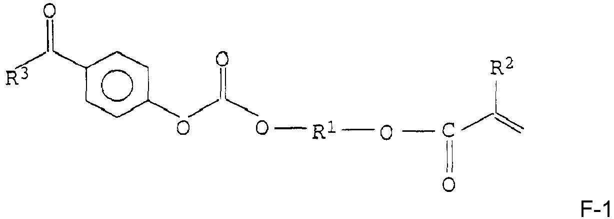 worin R1 für einen divalenten organischen Rest mit bis zu 30 C-Atomen, R2 für ein H-Atom oder eine Methylgruppe und R3 für eine substituierte oder unsubstituierte Phenylgruppe oder für eine C1-C4-Alkylgruppe steht. R1 steht besonders bevorzugt für eine Alkylengruppe, insbesondere für eine C2-C8-Alkylengruppe. R3 steht besonders bevorzugt für eine Methylgruppe oder für eine Phenylgruppe, ganz besonders bevorzugt für eine Phenylgruppe.

Weitere, als copolymerisierbare Fotoinitiatoren geeignete Acetophenon- und Benzophenonderivate sind z.B. solche der Formel F-2 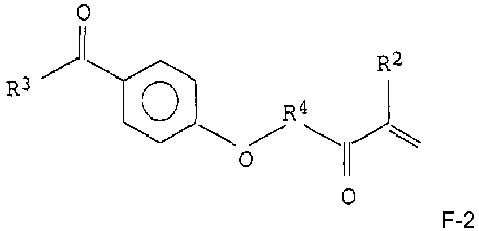 worin R2 und R3 die obige Bedeutung haben kann und R4 für eine Einfachbindung oder für (-CH2-CH2-O)n stehen kann, wobei n für eine ganze Zahl von 1 bis 12 steht.

Das Polymerisat ist im Fall der Verwendung des mindestens einen einpolymerisierten Fotoinitiators vorzugsweise zu 0,05 bis 10 Gew.-% oder zu 0,05 bis 5 Gew.-%, besonders bevorzugt zu 0,1 bis 2 Gew.-% oder zu 0,1 bis 1 Gew.-% aus mindestens einer ethylenisch ungesättigten, copolymerisierbaren Verbindung mit mindestens einer Fotoinitiatorgruppe gebildet.

Vernetzende Monomere mit mindestens einer Keto- oder Aldehydgruppe als vernetzendes Monomer (b) werden vorzugsweise in einer Menge von 0,05 bis 5 Gew.% oder von 0,1 bis 5 Gew.%, vorzugsweise 0,1 bis 2 Gew.% und besonders bevorzugt 0,2 bis 1 Gew. % bezogen auf die Summe aller Monomere eingesetzt. Die Keto-oder Aldehydgruppen sind vorzugsweise durch Copolymerisation von copolymerisierbaren, ethylenisch ungesättigten Verbindungen mit Keto-oder Aldehydgruppen an das Polymer gebunden. Geeignete derartige Verbindungen sind Acrolein, Methacrolein, Vinylalkylketone mit 1 bis 20, vorzugsweise 1 bis 10 C-Atomen im Alkylrest, Formylstyrol, (Meth)acrylsäurealkylester mit ein oder zwei Keto-oder Aldehyd-, bzw. einer Aldehyd-und einer Ketogruppe im Alkylrest, wobei der Alkylrest vorzugsweise insgesamt 3 bis 10 C-Atome umfasst, z. B. (Meth)acryloxyalkylpropanale, wie sie in der DE-A-2722097 beschrieben sind. Des weiteren eignen sich auch N-Oxoalkyl(meth)acrylamide wie sie z.B. aus der US-A-4226007, der DE-A-2061213 oder DE-A-2207209 bekannt sind. Besonders bevorzugt sind Acetoacetyl(meth) acrylat, Acetoacetoxyethyl(meth)acrylat (z.B. AAEMA) und insbesondere Diacetonacrylamid.

Im Falle der Verwendung von Monomeren mit Keto- oder Aldehydgruppen als vernetzende Monomere (b) wird das Polymerisat in Kombination mit mindestens einer reaktiven Verbindung eingesetzt, welche mindestens zwei funktionelle Gruppen enthält, die mit den Keto- oder Aldehydgruppen eine Vernetzungsreaktion eingehen. Die Verbindung mit den funktionellen Gruppen kann dem Polymerisat bzw. dessen wässriger Dispersion zu jedem Zeitpunkt zugesetzt werden. In der wässrigen Dispersion tritt noch keine Vernetzung mit den Keto- oder Aldehydgruppen ein. Erst bei der Trocknung tritt Vernetzung auf dem beschichteten Substrat ein. Die Menge der reaktiven Verbindung wird vorzugsweise so bemessen, dass das Molverhältnis der funktionellen Gruppen zu den Keto- und/oder Aldehydgruppen des Polymeren 1 : 10 bis 10 : 1, insbesondere 1 : 5 bis 5 : 1, besonders bevorzugt 1 : 2 bis 2 : 1 und ganz besonders bevorzugt 1 : 1,3 bis 1,3 : 1 beträgt. Der Gewichtsanteil der Verbindung mit den funktionellen Verbindung beträgt vorzugsweise 0,05 bis 2, insbesondere 0,05 bis 1, ganz besonders bevorzugt 0,1 bis 0,4 Gew.-Teile auf 100 Gew.-Teile Polymerisat.

Die reaktive Verbindung hat mindestens 2 funktionelle Gruppen, insbesondere 2 bis 5 funktionelle Gruppen, besonders bevorzugt 2 oder 3 funktionelle Gruppen, ganz besonders bevorzugt 2 funktionelle Gruppen, die mit den Keto- oder Aldehydgruppen eine Vernetzungsreaktion eingehen. In Betracht kommen z. B. Hydrazid-, Hydroxylamin- oder Oximether- oder Aminogruppen als funktionelle Gruppen. Besonders bevorzugt sind Hydrazidgruppen. Geeignete Verbindungen mit Hydrazidgruppen sind z. B. Polycarbonsäurehydrazide mit einem Molgewicht von bis zu 500 g/mol. Besonders bevorzugte Hydrazidverbindungen sind Dicarbonsäuredihydrazide mit bevorzugt 2 bis 10 C-Atomen. Genannt seien z. B. Oxalsäuredihydrazid, Malonsäuredihydrazid, Bernsteinsäuredihydrazid, Glutarsäuredihydrazid, Adipinsäurehydrazid, Sebazinsäuredihydrazin, Maleinsäuredihydrazid, Fumarsäuredihydrazid, Itaconsäuredihydrazid und/oder Isophthalsäuredihydrazid. Von besonderem Interesse sind: Adipinsäuredihydrazid, Sebazonsäuredihydrazid und Isophthalsäuredihydrazid.

Geeignete Verbindungen mit Hydroxylamin- oder Oximethergruppen sind z. B. in WO 93/25588 genannt. Es handelt sich z. B. um Hydroxylaminderivate der allgemeinen Formel

(H₂N - O) - ₂A I,

worin A für einen gesättigten oder ungesättigten aliphatischen, linearen oder verzweigten Kohlenwasserstoffrest aus 2 bis 12 Kohlenstoffatomen, welche durch 1 bis 3 nicht benachbarte Sauerstoffatome unterbrochen sein kann, und n für 2, 3 oder 4 steht, oder Oximether der Formel 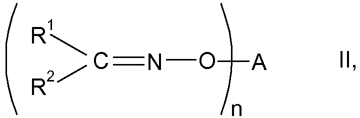 worin A und n die oben genannte Bedeutung haben und R¹ und R² unabhängig voneinander für einen C₁-C₁₀-Alkyl, einen C₁-C₁₀-Alkoxy-, einen C₅-C₁₀-Arylrest, welche auch 1 bis 3 nicht benachbarte Stickstoff-, Sauerstoff- oder Schwefelatome in der Kohlenstoffkette oder im Kohlenstoffring enthalten und durch 1 bis 3 C₁-C₄-Alkyl- oder Alkoxygruppen substituiert sein können, stehen R¹ oder R² für ein Wasserstoffatom stehen können, oder R¹ oder R² gemeinsam eine Brücke aus 2 bis 14 C-Atomen bilden, wobei ein Teil der C-Atome auch Bestandteil eines aromatischen Ringsystems sein kann. Bei der Variablen A in Formel I und II handelt es sich bevorzugt um eine Kohlenwasserstoffkette aus 2 bis 8 Kohlenstoffatomen und n ist vorzugsweise gleich 2. Die Reste R¹ und R² stehen jeweils bevorzugt für ein Wasserstoffatom, eine C₁- bis C₆-Alkoxygruppe. Im Falle des Wasserstoffatoms kann nur einer der Reste R¹ oder R² für ein Wasserstoffatom stehen.

Als Verbindungen mit Aminogruppen geeignet sind beispielsweise Ethylendiamin, Propylendiamin, Tetramethylendiamin, Pentamethylendiamin, Hexamethylendiamid, Diethylentriamin, Triethylentetramin, Polyethylenimine, teilhydrolysierte Polyvinylformamide, Ethylenoxid und Propylenoxid Addukte wie die Texaco "Jeffamine", Cyclohexandiamin und Xylylendiamin.

Das Polymerisat wird gebildet aus (c) mindestens 2 Gew.%, vorzugsweise mindestens 3 Gew.%, und vorzugsweise von bis zu 10 Gew.%, z.B. von 4 bis 10 Gew.%, bezogen auf die Gesamtmenge an Monomeren, mindestens eines Säuremonomers. Wird der Gesamtsäureanteil signifikant reduziert, kann keine ausreichende Stabilisierung der Dispersion erfolgen oder es werden signifikante Mengen an Emulgatoren benötigt. Säuremonomere sind ethylenisch ungesättigte, radikalisch polymerisierbare Monomere, welche mindestens eine Säuregruppe aufweisen. Säuremonomere sind beispielsweise ethylenisch ungesättigte Carbonsäuren, ethylenisch ungesättigte Sulfonsäuren und Vinylphosphonsäure. Als ethylenisch ungesättigte Carbonsäuren werden vorzugsweise 3 bis 6 C-Atome im Molekül aufweisende alpha,beta-monoethylenisch ungesättigte Mono- und Dicarbonsäuren eingesetzt. Beispiele hierfür sind Acrylsäure, Methacrylsäure, Itaconsäure, Maleinsäure, Fumarsäure, Crotonsäure, Vinylessigsäure und Vinylmilchsäure, 2-Carboxyethylacrylat. Als ethylenisch ungesättigte Sulfonsäuren eignen sich beispielsweise Vinylsulfonsäure, Styrolsulfonsäure, Acrylamidomethylpropansulfonsäure, Sulfopropylacrylat und Sulfopropylmethacrylat. Bevorzugt sind Acrylsäure und Methacrylsäure und deren Gemisch, besonders bevorzugt ist Acrylsäure.

Das Monomerengemisch zur Bildung des Polymerisats kann optional weitere, von den Monomeren (a)-(c) verschiedene Monomere (d) enthalten. Die Monomere (d) werden vorzugsweise in Mengen von 0 bis 40 Gew.% oder von 0 bis 30 Gew.%, insbesondere von 1 bis 30 Gew.%, bezogen auf die Gesamtmenge an Monomeren, eingesetzt. Die weiteren Monomere (d) können ausgewählt sein aus von den Monomeren (a) verschiedenen C1 bis C20 Alkyl(meth)acrylaten, C1 bis C20 Hydroxyalkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen, (Meth)acrylamid, Phenyloxyethylglykolmono-(meth)acrylat, Amino-(meth)acrylaten oder Mischungen dieser Monomeren. Zu nennen sind z.B. (Meth)acrylsäurealkylester mit einem C1-C10-Alkylrest, wie Methylmethacrylat, Methylacrylat, Ethylacrylat, Ethylmethacrylat. Vinylester von Carbonsäuren mit 1 bis 20 C-Atomen sind z. B. Vinyllaurat, Vinylstearat, Vinylpropionat, Versaticsäurevinylester und Vinylacetat. Als vinylaromatische Verbindungen kommen Vinyltoluol, alpha- und para-Methylstyrol, alpha-Butylstyrol, 4-n-Butylstyrol, 4-n-Decylstyrol und vorzugsweise Styrol in Betracht. Beispiele für Nitrile sind Acrylnitril und Methacrylnitril. Die Vinylhalogenide sind mit Chlor, Fluor oder Brom substituierte ethylenisch ungesättigte Verbindungen, bevorzugt Vinylchlorid und Vinylidenchlorid. Als Vinylether zu nennen sind z. B. Vinylmethylether oder Vinylisobutylether. Bevorzugt wird Vinylether von 1 bis 4 C-Atome enthaltenden Alkoholen. Als Kohlenwasserstoffe mit 2 bis 8 C-Atomen und ein oder zwei olefinischen Doppelbindungen seien Ethylen, Propylen, Isopren und Chloropren genannt. Als weitere Monomere besonders bevorzugt sind Methylacrylat, Methylmethacrylat, Ethylacrylat, Styrol, C1-C10-Hydroxyalkyl(meth)acrylate und (Meth)-acrylamid sowie Mischungen dieser Monomere. In einer Ausführungsform werden 0- 5 Gew.%, vorzugsweise 0,05 bis 5 Gew.% an C1-C10-Hydroxyalkyl(meth)acrylaten verwendet.

In einer Ausführungsform der Erfindung werden die C3 bis C20 Alkyl(meth)acrylate (a) in Mengen von 60 bis 95 Gew.%, die vernetzenden Monomere (b) in Mengen von 0,05 bis 5 Gew.% und die Säuremonomere (c) in Mengen von 4 bis 10 Gew.% eingesetzt.

In einer Ausführungsform werden
(a) 60 bis 95 Gew.% mindestens eines C3 bis C20 Alkyl(meth)acrylats, ausgewählt aus 2-Ethylhexylacrylat und n-Butylacrylat,
(b) 0,1 bis 5 Gew.% mindestens eines vernetzenden Monomeren, ausgewählt aus copolymerisierbaren Fotoinitiatoren, Glycidylmethacrylat, Acetoacetoxyethylmethacrylat und Diacetonacrylamid ,
(c) 4 bis 10 Gew.% mindestens eines Säuremonomers, ausgewählt aus Acrylsäure und Methacrylsäure und
(d) 0 bis 30 Gew.% an weiteren Monomeren copolymerisiert.

Die Polymerisation erfolgt in organischem Lösungsmittel in mindestens zwei Polymerisationsstufen. Das in einer der Polymerisationsstufen eingesetzte erste Monomerengemisch ist insgesamt hydrophober als das in der anderen Polymerisationsstufe eingesetzte zweite Monomerengemisch. Das kann z.B. dadurch erreicht werden, dass der Anteil an Säuremonomeren (c) an der Menge der in der ersten Monomermischung eingesetzten Monomeren kleiner ist als der Anteil der Säuremonomeren (c) an der Menge der in der zweiten Monomermischung eingesetzten Monomeren. In einer Ausführungsform sind in der ersten Monomermischung z.B. 0 bis 10 Gew.% Säuremonomere, bezogen auf die Summe der Monomere der ersten Monomermischung, enthalten und in der zweiten Monomermischung sind z.B. 11 bis 70 Gew.% Säuremonomere, bezogen auf die Summe der Monomere der zweiten Monomermischung, enthalten. Dabei kann das erste Monomerengemisch in einer ersten Stufe und das zweite Monomerengemisch in einer zeitlich später erfolgenden zweiten Stufe polymerisiert werden. Die Reihenfolge der Stufen kann aber auch umgekehrt sein. Bevorzugt ist die Polymerisation des hydrophoberen ersten Monomerengemischs in einer ersten Stufe und des hydrophileren zweiten Monomerengemischs in einer zeitlich später erfolgenden zweiten Stufe.

Vorzugsweise beträgt das Gewichtsverhältnis der Menge der in der ersten Stufe eingesetzten Monomere zur Menge der in der zweiten Stufe eingesetzten Monomere von 70:30 bis 98:2.

Die Polymerisation der Monomere kann unter Verwendung der üblichen Polymerisationsinitiatoren erfolgen, wobei man bei den üblichen Temperaturen in Lösung polymerisiert. Vorzugsweise werden die Polymerisate durch Polymerisation der Monomeren in organischen Lösungsmitteln, insbesondere in organischen Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 10, insbesondere bei 0,1 bis 4 Gew.-%, bezogen auf das Gesamtgewicht der Monomeren liegt, hergestellt.

Die Polymerisate können bei Temperaturen von 20 bis 150 °C, vorzugsweise bei Temperaturen im Bereich von 70 bis 120 °C und Drucken von 0,1 bis 100 bar (absolut), bevorzugt bei 0,3 bis 10 bar, in Gegenwart von 0,01 bis 10 Gew.-% an Peroxiden oder Azostartern als Polymerisationsinitiatoren, bezogen auf die Monomeren und in Gegenwart von 5 bis 200 Gew.-% an indifferenten Lösungsmitteln, bevorzugt 5 bis 35 Gew.-%, bezogen auf die Monomeren, d.h. durch Lösungspolymerisation hergestellt werden. Vorzugsweise erfolgt die Reaktion unter zunehmendem Vakuum, z.B. durch Absenkung des Drucks von Normaldruck ( 1 bar) auf 500 mbar (absolut). Bevorzugtes Lösungsmittel ist Essigsäureethylester.

Als Polymerisationsinitiatoren kommen beispielsweise Azoverbindungen, Ketonperoxide und Alkylperoxide in Betracht, z.B. Acylperoxide wie Benzoylperoxid, Dilauroylperoxid, Didecanoylperoxid, Isononanoylperoxid, Alkylester wie tert.-Butyl-tert.-pivalat, tert.-Butyl-per-2-ethylhexanoat, tert.-Butyl-per-maleinat, tert.-Butyl-per-isononanoat, tert.-Butyl-per-benzoat, tert.-Amylper-2-ethylhexanoat, Dialkylperoxide wie Dicumylperoxid, tert.-Butylcumylperoxid, Di-tert.-Butylperoxid und Peroxodicarbonate. Des Weiteren können als Initiatoren Azostarter wie beispielsweise 2,2'-Azobisisobutyronitril, 2,2'-Azobis(methylisobutyrat) oder 2,2'-Azobis(2,4-dimethylvaleronitril) Verwendung finden.

Die Glasübergangstemperatur des unvernetzten Polymerisats der erfindungsgemäßen Polymerdispersion (Gesamtpolymer aus beiden Stufen) ist vorzugsweise kleiner oder gleich 20°C, vorzugsweise kleiner oder gleich -10 °C oder kleiner oder gleich -20 °C und liegt z.B. im Bereich von -55 °C bis -30 °C. Die Glasübergangstemperatur lässt sich bestimmen durch Differential Scanning Calorimetrie (ASTM D 3418-08, sogenannte "midpoint temperature").

Vorzugsweise ist die Glasübergangstemperatur eines Polymeren aus Monomeren des ersten Monomerengemischs von -55 bis -20 °C, besonders bevorzugt von -50 bis -30 °C und die Glasübergangstemperatur eines Polymeren aus Monomeren des zweiten Monomerengemischs von -40 bis+50 °C, besonders bevorzugt von -30 bis +20 °C.

Das in der erfindungsgemäßen Haftklebstoffdispersion enthaltene, unvernetzte Polymerisat hat einen K-Wert von vorzugsweise mindestens 30, z.B. von 40 bis 100, besonders bevorzugt von 50 bis 100, gemessen in Tetrahydrofuran (1 %ige Lösung, 21 °C). Der K-Wert nach Fikentscher ist ein Maß für das Molekulargewicht und die Viskosität des Polymerisats.

Nach der Polymerisation in Lösung wird das Polymerisat in Wasser dispergiert. Zur Herstellung der erfindungsgemäßen wässrigen Dispersionen werden üblicherweise die erhaltenen organischen Lösungen der Polymerisate neutralisiert, z.B. durch Einrühren einer konzentrierten, bevorzugt 25 gew.-%igen wässrigen Ammoniak-Lösung und anschließendes Einrühren von Wasser, bei vorzugsweise erhöhter Temperatur (60 bis 80, vorzugsweise 70° C) in eine Dispersion überführt. Aus diesen Dispersionen wird das organische Lösungsmittel, z.B. destillativ, bis zu einem Gehalt von 5 Gew.-% und darunter oder bis zu 2 Gew.% und darunter entfernt, wobei die dabei mitentfernte Menge an Wasser gegebenenfalls wieder zurückgeführt wird. In einer alternativen Herstellungsweise wird entsprechend verfahren, die Entfernung des organischen Lösungsmittels jedoch bereits vor der Neutralisation durchgeführt. In einer bevorzugten Ausführungsform wird bei oder vor der Dispergierung ein sowohl mit Wasser als auch mit dem organischen Lösungsmittel mischbares zweites organisches Lösungsmittel, vorzugsweise Isopropanol oder Aceton zugeben. Das zweite organische Lösungsmittel hat vorzugsweise einen Löslichkeitsparameter δ von größer 20 MPa^{1/2} bei 25°C. Das zweite organische Lösungsmittel (z.B. Isopropanol oder Aceton) wird in der Regel vor dem Wasser zugegeben, um aufgrund seiner Mischbarkeit mit Wasser und dem ersten Lösungsmittel (z.B. Ethylacetat) die Dispergierung zu vereinfachen. Eine direkte Dispergierung aus dem ersten Lösungsmittel (z.B. Ethylacetat) ist bei geeigneten Bedingungen (genügend hohe Menge an Säuremonomeren, nicht zu hoher K-Wert und/oder hydrophile Comonomere) ebenfalls möglich, aber insgesamt weniger praktikabel. In einer Ausführungsform wird bei der Dispergierung in Wasser insgesamt weniger als 1,0 Gew.%, bezogen auf Feststoffgehalt der Polymerdispersion, Emulgator oder kein Emulgator verwendet.

Die Säuregruppen des Polymerisats können partiell oder vollständig mit geeigneten Basen neutralisiert werden. Als Neutralisationsmittel können Alkali- oder Erdalkalihydroxide wie z.B. Natriumhydroxid oder Kaliumhydroxid bzw. deren wässrigen Lösungen, Ammoniak, organische Amine oder Kombinationen der genannten Neutralisationsmittel verwendet werden. Vorzugsweise verwendet man Natronlauge, Kalilauge oder Ammoniak als Neutralisationsmittel, wobei ein Teil des neutralisierenden Ammoniaks, z.B. 0 bis 25 Mol-%, durch organische Amine, insbesondere Triethylamin, ersetzt werden kann. Die zugegebene Menge an Neutralisationsmittel wird vorzugsweise so bemessen, dass der pH-Wert der erfindungsgemäßen Dispersionen 6 bis 10, vorzugsweise 7 bis 9 beträgt.

Der Feststoffgehalt der erfindungsgemäßen Dispersionen wird durch Entfernen oder Zugeben von Wasser anwendungstechnisch vorteilhaft so gewählt, dass sich eine für die Verarbeitung günstige Viskosität ergibt. Er beträgt z.B. 25 bis 60, vorzugsweise 30 bis 50 Gew.-%.

Gegenstand der Erfindung sind auch wässrige Haftklebstoffdispersionen, hergestellt nach dem oben beschriebenen Verfahren.

Für eine Anwendung als Haftklebstoffe können die wässrigen Haftklebstoffdispersionen allein aus den in Wasser dispergierten Polymerisaten bestehen. Die Haftklebstoffdispersionen können jedoch auch noch weitere Zusatzstoffe enthalten, z.B. Füllstoffe, Farbstoffe, Verlaufsmittel, Verdicker, vorzugsweise Assoziativverdicker, Entschäumer, Weichmacher, Pigmente, Netzmittel oder Tackifier (klebrigmachende Harze). Insbesondere kann die Viskosität durch Zugabe von Verdickern modifiziert werden oder die klebetechnischen Eigenschaften können durch Zusatz von Harzen oder Weichmachern variiert werden. Tackifier sind z. B. aus Adhesive Age, Juli 1987, Seite 19-23 oder Polym. Mater. Sci. Eng. 61 (1989), Seite 588-592 bekannt. Für eine bessere Benetzung von Oberflächen können die Haftklebstoffe insbesondere Benetzungshilfsmittel, z. B. Fettalkoholethoxylate, Alkylphenolethoxylate, Nonylphenolethoxylate, Polyoxyethylene/-propylene, Dialkylester sulfonierter Dicarbonsäuren oder Natriumdodecylsulfonate enthalten. Die Menge an Zusatzstoffen beträgt im allgemeinen 0,05 bis 5 Gew.-Teile, insbesondere 0,1 bis 3 Gew.-Teile auf 100 Gew.-Teile Polymer (fest).

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z.B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit. Des Weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung. Als Tackifier werden zunehmend auch Polyacrylate, welche ein geringes Molgewicht aufweisen, verwendet. Vorzugsweise haben diese Polyacrylate ein gewichtsmittleres Molekulargewicht M_{w} unter 30 000. Die Polyacrylate bestehen bevorzugt zu mindestens 60, insbesondere mindestens 80 Gew.-% aus C₁-C₈ Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten. Die Tackifier können in einfacher Weise der Polymerdispersion zugesetzt werden. Vorzugsweise liegen die Tackifier dabei selber in Form einer wässrigen Dispersion vor. Die Gewichtsmenge der Tackifier beträgt vorzugsweise 5 bis 100 Gew.-Teile, besonders bevorzugt 10 bis 50 Gew.-Teile. bezogen auf 100 Gew.-Teile Polymer (fest/fest).

Die erfindungsgemäßen Haftklebstoffdispersionen bzw. daraus hergestellte Verfilmungen weisen ein günstiges kohäsives und adhäsives Verhalten auf und eignen sich als Haftklebstoffe für hoch-kohäsive selbstklebende Artikel. Gegenstand der Erfindung sind daher auch selbstklebende Artikel, erhältlich durch Beschichten eines Trägermaterials zumindest teilweise mit einer erfindungsgemäßen Haftklebstoffdispersion. Geeignete Trägermaterialien sind z.B. Papier, Textilien, Kunststofffolien und Metallfolien. Bei den selbstklebenden Artikeln kann es sich z.B. um Klebefolien, Klebebänder oder selbstklebende Etiketten handeln. Im Fall von Klebefolien, kann es sich z.B. um Schutzfolien und Dekorfolien handeln. Im Fall von selbstklebenden Etiketten kann es sich um Etiketten aus Papier oder einer thermoplastischen Folie handeln. Als thermoplastische Folie kommen z.B. Folien aus Polyolefinen (z.B. Polyethylen, Polypropylen), Polyolefincopolymeren, Folien aus Polyestern (z.B. Polyethylenterephtalat) oder Polyacetat in Betracht. Die Oberflächen der thermoplastischen Polymerfolien sind vorzugweise coronabehandelt. Die Etiketten sind einseitig mit Klebstoff beschichtet.

Aufgrund ihrer Klebeeigenschaften sind die Haftklebstoffdispersionen besonders geeignet für die Herstellung von Klebebändern, wobei der Klebstoff auf einem bandförmigen Trägermaterial aufgetragen ist. Bei dem Trägermaterial des Klebebandes kann es sich um Gewebe, Vliese, Folien, Papier, Filze, Schaumstoffe und Coextrudate oder Kombinationen davon handeln. Anwendungsgebiete sind einseitige und doppelseitige Klebebänder, Montageklebebänder, medizinische Klebebänder, Verpackungsklebebänder, Kabelwickelbänder, Teppichverlegebänder und ähnliches.

Gegenstand der Erfindung ist auch ein Verfahren zur Herstellung von selbstklebenden Artikeln, dadurch gekennzeichnet, dass eine erfindungsgemäße wässrige Haftklebstoffdispersion zur Verfügung gestellt bzw. wie oben beschrieben hergestellt wird und auf einem Trägermaterial aufgebracht und getrocknet wird, wobei eine Vernetzung erfolgen kann. Die Verfilmung der aufgetragenen dispersen Schicht wird im Allgemeinen durch Erhitzen vorgenommen.

Die selbstklebenden Artikel sind auf mindestens einer Oberfläche zumindest teilweise mit einem erfindungsgemäßen Haftklebstoff beschichtet. Der Klebstoff kann nach üblichen Methoden wie Rollen, Rakeln oder Streichen auf die Artikel aufgetragen werden. Es können übliche Beschichtungsverfahren angewendet werden, z.B. Walzenstreichen, Gegenlaufwalzenstreichen, Gravurwalzenstreichen, Gegenlaufgravurwalzenstreichen, Bürstenstreichen, Stabstreichen, Sprühbeschichten, Luftbürstenbeschichtung, Meniskusbeschichtung, Vorhangbeschichtung oder Tauchbeschichtung. Die Auftragsmenge beträgt bevorzugt 0,1 bis 100 g, besonders bevorzugt 2 bis 80 g Feststoff pro m². Für Klebebänder beträgt die Auftragsmenge bevorzugt10 bis 100 g, besonders bevorzugt 20 bis 80 g Feststoff pro m². Nach dem Auftragen folgt im Allgemeinen ein Trocknungsschritt zur Entfernung des Wasser bzw. der Lösungsmittel. Das Wasser kann durch Trocknung bei z.B. 50 bis 150°C entfernt werden. Die so erhaltenen, beschichteten Substrate werden z.B. als Selbstklebeartikel, wie Etiketten, Klebebänder oder Folien verwendet. Die Träger können hierzu vor oder nach dem Aufbringen des Klebstoffs zu Klebebändern, Etiketten oder Folien geschnitten werden. Zur späteren Verwendung kann die mit Haftklebstoff beschichtete Seite der Substrate, mit einem Releasepapier, z. B. mit einem silikonisierten Papier, abgedeckt werden.

Bei den Substraten, auf welche die selbstklebenden Artikel vorteilhaft aufgebracht werden können, kann es sich z.B. um Metall, Holz, Mauerwerk, Glas, Papier oder Kunststoff handeln. Die selbstklebenden Artikel eignen sich insbesondere zum Verkleben auf Verpackungsoberflächen, Kartons, Kunststoffverpackungen, Bücher, Fenster, Kraftfahrzeugkarosserien oder Karosserieteilen.

Besondere Vorteile des erfindungsgemäßen Herstellverfahrens und der erfindungsgemäßen Produkte sind insbesondere:
- verbesserte Klebeeigenschaften insbesondere hinsichtlich Kohäsion im Vergleich zu herkömmlich durch Emulsionspolymerisation hergestellten Haftklebstoffdispersionen
- gute Dispergierbarkeit und gute Dispersionsstabilität, wobei emulgatorarm oder ganz oder nahezu emulgatorfrei gearbeitet werden kann
- frei oder nahezu frei von organischen Lösungsmitteln
- hohe Molmassen, hohe K-Werte bei geringem oder keinem Gelgehalt
- zusätzlicher Kohäsionsaufbau durch Vernetzbarkeit

### Beispiele

### Beispiel 1

In einem auf 75°C geheizten Kessel werden 0.6 g *tert*-Butylperpivalat und 400 g Essigsäureethylester vorgelegt. Anschließend werden zeitgleich Zulauf 1 (385 g 2-Ethylhexylacrylat (EHA), 50 g n-Butylmethacrylat (BMA), 20 g Acrylsäure (AS) und 10 g Diacetonacrylamid (DAAM)) und Zulauf 2 (0,9 g tert-Butylperpivalat in 200 g Essigsäureethylester) gestartet. Zulauf 1 läuft 2h, Zulauf 2 läuft 4h. 1 h nach Ende von Zulauf 1 wird Zulauf 3 (17,5 g Acrylsäure und 17,5 g Ethylhexylacrylat) gestartet und innerhalb von 15 min zugegeben. Anschließend wird 2h bei 75°C nachpolymerisiert. Im Anschluss werden 35.4 g Ammoniak (25%ig) und 400 g *iso*-Propanol zugegeben. Dann werden innerhalb von 15 min 1200 g vollentsalztes Wasser zugegeben und danach die organischen Lösungsmittel (Essigsäureethylester und *iso*-Propanol) im Vakuum abdestilliert.

Es handelt sich um eine DAAM/ADDH chemisch vernetzbare Sekundärdispersion. Dabei entspricht Zulauf 1 der ersten Polymerisationsstufe (hydrophob, 4,3 Gew.% Säuremonomere) und Zulauf 3 der zweiten, hydrophileren Polymerisationsstufe (50 Gew.% Säuremonomere).

Monomere in pphm (parts per hundred monomer; Gewichtsteile pro hundert Gewichtsteile Monomer):
Stufe 1: 77 EHA / 10 BMA / 4 AS / 2 DAAM
Stufe 2: 3,5 AS / 3,5 EHA
Initiator: insgesamt 0,3 pphm *tert*-Butylperpivalat

Bezüglich des Verhältnisses beider Stufen zueinander und der Zusammensetzung der Stufen ist das Rezept flexibel. Hauptbestandteil sollte jedoch immer EHA oder n-Butylacrylat (BA) sein. Stufe 1 und Stufe 2 können auch in umgekehrter Reihenfolge polymerisiert werden.

Isopropanol wird vor dem Wasser zugegeben, um aufgrund seiner Mischbarkeit mit Wasser und Ethylacetat die Dispergierung zu vereinfachen. Eine direkte Dispergierung aus Ethylacetat ist bei geeigneten Bedingungen (genügend hohe Säuremenge, nicht zu hoher K-Wert und/oder hydrophile Comonomere) ebenfalls möglich, aber insgesamt weniger praktikabel.

### Beispiele 2 bis 5

Die in den folgenden Beispielen eingesetzten Polymere wurden wie in Beispiel 1 mit folgender Monomerzusammensetzung hergestellt (Mengenangaben in pphm):
1. Stufe: 79 EHA / 10 BMA / 4 AS / 0,56 FI1484 (polymerisierbarer Fotoinitiator der Formel F-1, wobei R1 eine C4-Kette, R2 Wasserstoff und R3 eine Phenylgruppe ist)
2. Stufe: 3,5 AS / 3,5 EHA

Verwendete Lösungsmittel:
Beispiel 2 (Vergleich): Isobutanol (i-BuOH)
Beispiel 3 (Vergleich): Toluol
Beispiel 4 (Vergleich): Methylethylketon (MEK)
Beispiel 5 (erfindungsgemäß): Essigsäureethylester (EtOAc)

Es wurden jeweils die K-Werte als Maß für das Molekulargewicht der erhaltenen Polymerisate sowie die Scherfestigkeit (Kohäsion) und die Schälfestigkeit (Adhäsion) bei Klebeanwendungen gemessen. Die Ergebnisse sind in Tabelle 1 zusammengefasst.

Anwendungstechnische Prüfung:
Die Haftklebstoffdispersionen wurden mit einer Auftragsmenge von 60 g/m² auf Hostaphan® RN 36 (biaxial orientierte Folie aus Polyethylenterephtalat, 36 µm Dicke) als Träger beschichtet, durch Bestrahlung mit UV-Licht vernetzt (Bestrahlungsintensität siehe Tabelle 1) und getrocknet. Anschließend wurden die Schälfestigkeit (Adhäsion) und die Scherfestigkeit (Kohäsion) bestimmt.

Der mit Haftklebstoff beschichtete Träger wurde in 12,5 mm breite Prüfstreifen geschnitten. Zur Bestimmung der Scherfestigkeit wurden die Prüfstreifen mit einer verklebten Fläche von 12,5x12,5 mm auf Stahl geklebt, mit einer 1 kg schweren Rolle 1 mal angerollt, 10 min gelagert (im Normklima, 50 % rel. Luftfeuchtigkeit 1 bar, 23 °C) und anschließend hängend mit einem 1 kg Gewicht belastet (im Normklima). Das Maß für die Scherfestigkeit war die Zeit in Minuten bis zum Abfallen des Gewichts; es wird jeweils der Durchschnitt aus 5 Messungen berechnet.

Bei der Bestimmung der Schälfestigkeit (Adhäsion) wurde jeweils ein 25 mm breiter Prüfstreifen auf einen Prüfkörper aus Stahl geklebt und mit einer 1 kg schweren Rolle 1-mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfkörper abgezogen und der dazu benötigte Kraftaufwand gemessen. Das Maß für die Schälfestigkeit war die Kraft in N/25 mm, die sich als Durchschnittswert aus fünf Messungen ergab. Die Schälfestigkeit wurde 24 Stunden nach der Verklebung bestimmt. Nach dieser Zeit hat sich die Klebekraft voll ausgebildet. Die Testmethoden entsprechen im Wesentlichen den Finat-Testmethoden (FTM) Nr. 1 und Nr. 8. Die Ergebnisse sind in Tabelle 1 dargestellt.

**Tabelle 1: Testergebnisse K-Werte, Schälfestigkeit und Scherfestigkeit**

| Bsp. | Lösungsmittel | K-Wert | Scherfestigkeit auf Stahl [min] | | | Schälfestigkeit auf Stahl [N/25 mm] | | |
|---|---|---|---|---|---|---|---|---|
| | | | 0 mJ/cm² | 25 mJ/cm² | 65 mJ/cm² | 0 mJ/cm² | 25 mJ/cm² | 65 mJ/cm² |
| 2 | i-BuOH | 32 | <1 | <1 | <1 | 5.9 | 8.1 | 9.5 |
| 3 | Toluol | 37 | <1 | 2 | 2 | 16.3 | 18.0 | 20.1 |
| 4 | MEK | 34 | <1 | <1 | <1 | 10.9 | 11.4 | 13.0 |
| 5 | EtOAc | 56 | 2 | 23 | 58 | 34.1 | 12.1 | 10.2 |

| | | | | | | | | |
|---|---|---|---|---|---|---|---|---|
| Die Angaben in der zweiten Tabellenzeile stellen die Bestrahlungsintensität bei der UV-Vernetzung dar. | | | | | | | | |

Die Ergebnisse zeigen, dass die Molekulargewichte, hier repräsentiert durch die K-Werte, bei der Polymerisation in Ethylacetat (erfindungsgemäßes Beispiel 5) deutlich höher (bis ca. 60) als im Fall der Polymerisation in Isobutanol, Toluol oder MEK liegen.

Die Ergebnisse zeigen außerdem, dass im Falle der Sekundärdispersion, die aus dem in Ethylacetat hergestellten Lösungspolymerisat hergestellt wurde, eine bessere Balance zwischen Kohäsion und Adhäsion, insbesondere eine wesentliche höhere Kohäsion erreicht werden kann. Die geringen K-Werte bei der Polymerisation in übertragenden Lösungsmitteln resultieren in sehr geringen Scherfestigkeiten. Die Kohäsion kann dabei auch durch UV-Vernetzung nicht nennenswert verbessert werden.

### Beispiel 6

Analog Beispiel 5, Verwendung von n-Butylacrylat anstelle von 2-Ethylhexylacrylat als Hauptmonomer. Bei Polymerisation in Ethylacetat können K-Werte um 70, in Einzelfällen bis zu 95 erreicht werden.

### Beispiele 7 bis 10

Analog Beispiel 5, Copolymerisation von unterschiedlichen Mengen an Glycidylmethacrylat (GMA) in der ersten Stufe (siehe Tabelle 2).

**Tabelle 2: Testergebnisse K-Werte**

| Beispiel | GMA [Gew.-%] | K-Wert |
|---|---|---|
| 7 | 0 | 54 (Lösungspolymer) |
| | | 56 (nach Dispergierung) |
| 8 | 0,25 | 51 (Lösungspolymer) |
| | | 70 (nach Dispergierung) |
| 9 | 0,5 | 52 (Lösungspolymer) |
| | | 95 (nach Dispergierung) |
| 10 | 0,75 | 54 (Lösungspolymer) |
| | | 92 (nach Dispergierung) |

**Tabelle 3: Testergebnisse Schälfestigkeit und Scherfestigkeit GMA-haltiger Dispersionen**

| Bsp. | GMA [Gew.-%] | Scherfestigkeit auf Stahl [min] | | | Schälfestigkeit auf Stahl [N/25 mm] | | |
|---|---|---|---|---|---|---|---|
| | | 0 mJ/cm² | 25 mJ/cm² | 65 mJ/cm² | 0 mJ/cm² | 25 mJ/cm² | 65 mJ/cm² |
| 8 | 0,25 | 85 | 226 | 69 | | 12,6 | 10,6 |
| 9 | 0,5 | 357 | 258 | 97 | 12,6 | 10,6 | 8,5 |
| 10 | 0,75 | 149 | 103 | 231 | 10,3 | 9,5 | 9,1 |

| | | | | | | | |
|---|---|---|---|---|---|---|---|
| Die Angaben in der zweiten Tabellenzeile stellen die Bestrahlungsintensität bei der UV-Vernetzung dar. | | | | | | | |

Die Ergebnisse zeigen, dass wenn geringe Mengen GMA in der ersten Polymerisationsstufe copolymerisiert werden, der K-Wert durch die Sekundärdispergierung in Wasser ansteigt. Über die Menge des copolymerisierten GMA kann die Balance zwischen Kohäsion und Adhäsion eingestellt werden.

### Beispiel 11

Analog Beispiel 5, einstufige Polymerisation anstelle von zweistufiger Polymerisation. Die Polymerisate erwiesen sich als nicht in Wasser dispergierbar, was sich durch Phasentrennung und Koagulatbildung bemerkbar macht. Für die Dispergierung der in Ethylacetat hergestellten Lösungspolymere ist die beschriebene zweistufige Fahrweise erforderlich. Wird eine identische oder ähnliche Copolymerzusammensetzung einstufig hergestellt, ist keine Dispergierung möglich.

## Patentansprüche

1. Verfahren zur Herstellung einer wässrigen Haftklebstoffdispersion,
- wobei zunächst in einem organischen Lösungsmittel, welches keine primären oder sekundären alkoholischen OH-Gruppen und keine allylischen oder benzylischen Wasserstoffatome aufweist, durch radikalische Polymerisation ein Polymerisat hergestellt wird,
- wobei das Polymerisat herstellbar ist aus radikalisch polymerisierbaren Monomeren, umfassend
(a) mindestens 40 Gew.% mindestens eines C3 bis C20 Alkyl(meth)acrylats, welches, wenn es als Homopolymer polymerisiert ist, eine Glasübergangstemperatur von -20°C oder weniger, vorzugsweise -30 °C oder weniger aufweist,
(b) mindestens 0,05 Gew.% mindestens eines vernetzenden Monomeren,
(c) mindestens 2 Gew.% mindestens eines Säuremonomers,
(d) optional weiteren Monomeren,
wobei die Angaben der Monomermengen jeweils auf die Summe aller Monomere bezogen sind,
- wobei das Polymerisat in mindestens 2 Polymerisationsstufen derart herstellbar ist, dass in einer Polymerisationsstufe eine erste Monomermischung polymerisiert wird und in einer anderen Polymerisationsstufe eine von der ersten Monomermischung verschiedene zweite Monomermischung polymerisiert wird und der Anteil an Säuremonomeren in der zweiten Monomermischung größer ist als der Anteil an Säuremonomeren in der ersten Monomermischung;
- wobei die Glasübergangstemperatur des unvernetzten Polymerisats kleiner oder gleich 20°C, vorzugsweise kleiner oder gleich -10 °C beträgt;
- und wobei das Polymerisat in Wasser dispergiert wird und das organische Lösungsmittel entfernt wird.

2. Verfahren nach dem vorhergehenden Anspruch, **dadurch gekennzeichnet, dass** das organische Lösungsmittel, in welchem die Polymerisation durchgeführt wird im Wesentlichen aus Ethylacetat besteht.

3. Verfahren nach einem der vorhergehenden Ansprüche, **dadurch gekennzeichnet, dass** in der ersten Monomermischung 0 bis 10 Gew.% Säuremonomere, bezogen auf die Summe der Monomere der ersten Monomermischung, enthalten sind und dass in der zweiten Monomermischung 11 bis 70 Gew.% Säuremonomere, bezogen auf die Summe der Monomere der zweiten Monomermischung, enthalten sind.

4. Verfahren nach einem der vorhergehenden Ansprüche, **dadurch gekennzeichnet, dass** das vernetzende Monomer ausgewählt ist aus der Gruppe bestehend aus mindestens eine Epoxygruppe aufweisenden Monomeren, mindestens eine Keto- oder Aldehydgruppe aufweisenden Monomeren, mindestens eine Fotoinitiatorgruppe aufweisenden Monomeren und mindestens eine Silangruppe aufweisenden Monomeren.

5. Verfahren nach einem der vorhergehenden Ansprüche, **dadurch gekennzeichnet, dass** bei der Dispergierung in Wasser insgesamt weniger als 1,0 Gew.%, bezogen auf Feststoffgehalt der Polymerdispersion, Emulgator oder kein Emulgator verwendet wird.

6. Verfahren nach einem der vorhergehenden Ansprüche, **dadurch gekennzeichnet, dass** bei der Dispergierung ein sowohl mit Wasser als auch mit dem organischen Lösungsmittel mischbares zweites organisches Lösungsmittel, vorzugsweise Isopropanol zugegeben wird.

7. Verfahren nach einem der vorhergehenden Ansprüche, **dadurch gekennzeichnet, dass** die C3 bis C20 Alkyl(meth)acrylate (a) ausgewählt sind aus 2-Ethylhexylacrylat und n-Butylacrylat.

8. Verfahren nach einem der vorhergehenden Ansprüche, **dadurch gekennzeichnet, dass** die Säuremonomere (c) ausgewählt sind aus der Gruppe bestehend aus Acrylsäure, Methacrylsäure, Itaconsäure, Maleinsäure, Fumarsäure, Crotonsäure, Vinylessigsäure, Vinylmilchsäure, 2-Carboxyethylacrylat, Vinylsulfonsäure, Styrolsulfonsäure, Acrylamidomethylpropansulfonsäure, Sulfopropylacrylat, Sulfopropylmethacrylat und Mischungen dieser Monomere.

9. Verfahren nach einem der vorhergehenden Ansprüche, **dadurch gekennzeichnet, dass** die C3 bis C20 Alkyl(meth)acrylate (a) in Mengen von 60 bis 95 Gew.%, die vernetzenden Monomere (b) in Mengen von 0,05 bis 5 Gew.% und die Säuremonomere (c) in Mengen von 4 bis 10 Gew.% eingesetzt werden.

10. Verfahren nach einem der vorhergehenden Ansprüche, **dadurch gekennzeichnet, dass** die weiteren Monomere (d) in Mengen von 0 bis 30 Gew.%, bezogen auf die Gesamtmenge an Monomeren eingesetzt werden und ausgewählt sind aus der Gruppe bestehend aus von den Monomeren (a) verschiedenen C1- bis C20-Alkylacrylaten, C1- bis C20-Alkylmethacrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C Atome enthaltenden Alkoholen, aliphatischen Kohlenwasserstoffen mit 2 bis 8 C Atomen und ein oder zwei Doppelbindungen und Mischungen dieser Monomere, C₁-C₁₀-Hydroxyalkyl(meth)acrylaten, (Meth)acrylamid, Phenyloxyethylglykol-mono-(meth)acrylat, Amino-(meth)acrylaten.

11. Verfahren nach einem der vorhergehenden Ansprüche, **dadurch gekennzeichnet, dass** insgesamt
(a) 60 bis 95 Gew.% mindestens eines C3 bis C20 Alkyl(meth)acrylats, ausgewählt aus 2-Ethylhexylacrylat und n-Butylacrylat,
(b) 0,1 bis 5 Gew.% mindestens eines vernetzenden Monomeren, ausgewählt aus copolymerisierbaren Fotoinitiatoren, Glycidylmethacrylat, Acetoacetoxyethylmethacrylat und Diacetonacrylamid,
(c) 4 bis 10 Gew.% mindestens eines Säuremonomers, ausgewählt aus Acrylsäure und Methacrylsäure und
(d) 0 bis 30 Gew.% an weiteren Monomeren copolymerisiert werden.

12. Verfahren nach einem der vorhergehenden Ansprüche, **dadurch gekennzeichnet, dass** das Gewichtsverhältnis der Menge der in der ersten Stufe eingesetzten Monomere zur Menge der in der zweiten Stufe eingesetzten Monomere von 70:30 bis 98:2 beträgt.

13. Wässrige Haftklebstoffdispersion, hergestellt nach dem Verfahren nach einem der vorhergehenden Ansprüche.

14. Verwendung der wässrigen Haftklebstoffdispersion nach dem vorhergehenden Anspruch zur Herstellung von selbstklebenden Artikeln, insbesondere von Klebebändern.

15. Selbstklebender Artikel, erhältlich durch Beschichten eines Trägermaterials mit einer Haftklebstoffdispersion gemäß Anspruch 13.

16. Selbstklebender Artikel gemäß dem vorhergehenden Anspruch, **dadurch gekennzeichnet, dass** es sich um ein selbstklebendes Etikett, eine Klebefolie oder um ein Klebeband handelt.

17. Verfahren zur Herstellung von selbstklebenden Artikeln, **dadurch gekennzeichnet, dass** eine wässrige Haftklebstoffdispersion gemäß Anspruch 13 zur Verfügung gestellt wird und auf einem Trägermaterial aufgebracht und getrocknet wird.
